# EUROPEAN PATENT SPECIFICATION

(11) **EP 2 571 122 B1**
(45) Date of publication and mention of the grant of the patent: **27.05.2015**
(21) Application number: 11729333.2
(22) Date of filing: 03.05.2011
(51) Int. Cl.: H02G 3/04, H02G 3/06

(54) **CONNECTING PIECE FOR ELECTRICAL CONDUCTOR CHANNELS WITH LID**
VERBINDUNGSTEIL FÜR ELEKTRISCHE LEITERKANÄLE MIT EINEM DECKEL
ÉLÉMENT DE CONNEXION POUR GOULOTTES DE CONDUCTEURS ÉLECTRIQUES AVEC COUVERCLE

(30) Priority: 14.05.2010 ES 201000487 U
(43) Date of publication of application: 20.03.2013
(73) Proprietor: Unex Aparellaje Electrico S.L., 08903 L'Hospitalet de Llobregat (Barcelona) (ES)
(72) Inventor: MOSTAZO OVIEDO, José Antonio, E-08940 Cornellà de Llobregat (ES)
(74) Representative: Curell Suñol S.L.P.
(86) International application number: PCT/ES2011/070314
(87) International publication number: WO 2011/141601

(56) References cited:
- GB-A- 2 390 490
- US-A- 2 905 201
- US-A- 4 349 220
- US-A- 6 143 984

## Description

### Field of the invention

This invention relates to a butt-strap for electrical conductor trays with lid, in particular one applied to the trays that are formed by the association of a base body, straight channel shaped, and a lid body that adjusts on the outside and fits in a releasable manner into the outer faces of the walls of the base body. These trays can be installed in cantilever supports, preferably in a horizontal position, or butting onto a wall. In the latter case, the trays can be placed in any position and have mutual association means that make it possible to place longitudinally, head to head, two consecutive trays leaving between them a free space serving as joint to absorb any possible thermal expansion or contraction.

The butt-straps to which the invention relates are essentially intended to render inaccessible the free space of the expansion joint foreseen in the head to head installation of electrical conductor trays with lid, so as to avoid the entry into said space of undesirable elements that may affect the function or service life of the conductors.

### State of the art

Document ES2047289T3 discloses a cover seal that forms a closure for channels, moulds or other conduits, which has to be placed locally on the lips of the conduit body, in the transverse direction with respect to said conduit body, to ensure a continuity between two segments and, therefore, oppose the introduction of any object, for example any sheet, between those two segments. This seal includes, at each end thereof, adjustment means that can tighten the lip of the conduit body and which consist of clamping means including in combination, on the one hand, two tabs that are separated from one another and which can be adjusted in the plan direction on either the top or bottom surfaces of said lip, on any point thereof, and on the other hand, between said tabs, at least one square fold that is suitable for resting elastically on the other lip surface.

Document ES1034379U discloses an airtight closure for raceways, of the type that forms the join between electrical conduit conduction raceways, which comprises a body with a hollow space for inserting raceways, a lid and a lid closure with its corresponding hinge. This closure body is made up of a substantially prismatic body that fully coincides with the profile of the raceways that it joins. The raceways can be inserted into the hollow insertion space, which has internal and external ribs and projections located opposite a series of notches. The closure lid is made up of a hinge provided with a pin and a closing device with a harpoon shaped end that can be inserted into a corresponding nail on the body, with said lid being provided on the inside with an airtight seal.

These arrangements for seals suffer from specific drawbacks. The lid seal according to document ES2047289T3 must be complemented by the channel lid and only covers a central part thereof. Also, the seal must be positioned between the channel and the lid covering it. The airtight closure according to document ES1034379U consists of an implement that on its own simultaneously encompasses the channel and a lid superimposed on it, adopting the shape of a quadrangular clamp provided with an articulation and a closure mechanism, which makes it a complex and costly device for its intended function.

Document US2905201A discloses a combination of two consecutive trays and a butt-strap according to the preamble of claim 1.

### Summary of the invention

In order to overcome said drawbacks the solution has been adopted to provide a channel shaped device that covers and extends over the whole periphery of the free space of the expansion joint existing between two consecutive trays fitted with lids, so that said device is effective, simple, a reduced size and easy to handle.

According to the preceding solution, the combination of two consecutive trays and a butt-strap according to claim 1 has been developed.

The butt-strap according to the invention can be positioned in the trays in different ways, depending on the position of said trays in cantilever supports on a wall or butting onto said wall, according to the three modes explained below.

In a first mode, said first part of the peripheral transverse area of the trays, which is covered by the clamping part, is formed by of the base body of the tray and the edges of the lid body of the tray; said second part of the peripheral transverse area of the trays, whose longitudinal margins are covered by the inner cantilever wings, is formed by the lid body of the tray; and said third part of the peripheral transverse area of the trays, which said closure part abuts under said inner cantilever wings, is formed by the surface of the larger outer face of the lid body of the tray.

In a second mode, said first part of the peripheral transverse area of the trays, which is covered by the clamping part, is formed by the lid body of the tray and the sides of the base body of the tray; said second part of the peripheral transverse area of the trays, whose longitudinal margins are covered by the inner cantilever wings, is formed by the base body of the tray; and said third part of the peripheral transverse area of the trays, which said closure part abuts, under said inner cantilever wings, is formed by the surface of the larger outer face of the base body of the tray.

In a third mode, which is applied in the case where the trays are installed abutting a wall, only the clamping part can be installed on the trays, which covers: with the inner face of its base, the larger outer face of the lid body of the tray; with its walls, the sides of the base body of the tray and the edges of the lid body of the tray; and with its inner cantilever wings, two longitudinal margins on the larger outer face of the base body of the tray.

In the butt-strap according to the invention, it can be envisaged that the width of the clamping and closure parts is appropriate so that the clearance of said butt-strap in its position is such that it prevents, in any position, the access of undesirable elements in said free space serving as a joint between two consecutive trays.

Preferably, said clamping part is made with an electrically insulating elastic material and said inner cantilever wings are coplanar and parallel to the base of said clamping part on which they extend, and their width and thickness are less than the width and thickness of the walls of said clamping part.

Preferably, said inner cantilever wings have, on their face facing towards the base of said clamping part, releasable retention means that complement other retention means provided on the ends of said closure part.

Preferably, said closure part is also made with an electrically insulating material, is flat shaped and has a length determined by the distance between said retention means provided on the inner cantilever wings, and a width equivalent to that of said clamping part.

Preferably, said closure part has on the ends of its outer face two rectangular depressions into which there fit at the bottom said cantilever wings on the walls of the clamping part.

Preferably, said clamping and/or closure parts have, on their face abutting said base body and/or said lid body of the consecutive trays, means for fitting into said free space serving as a joint.

According to one embodiment, said fitting means of the clamping part are provided, in the centre in the lengthwise direction, on the inner face of the base of said clamping part and consist of an orthogonal flange that is shorter in length than said base, and with the height and thickness of said orthogonal flange not exceeding, respectively, the thickness of said base body of the tray and the width of said free space serving as joint. According to another embodiment, said fitting means of the closure part are provided, in the centre and in the lengthwise direction, on the inner surface of said closure part and consist of an orthogonal flange that is shorter in length than said closure part and with the height and thickness of said orthogonal flange not exceeding, respectively, the thickness of said base body of the tray and the width of said free space serving as a joint.

Preferably, the butt-strap according to the invention comprises releasable retention means of said closure part on said inner cantilever wings of the clamping part that are releasable grooving and tonguing means.

Preferably, the walls of said clamping part have on each side edge thereof a notch in the vicinity of where said inner cantilever wings emerge, for inserting a tool to force the disengagement of said clamping part and said closure part.

### Brief description of the drawings

To facilitate the comprehension of the principles explained, while also disclosing various construction details, a description is provided below of an embodiment of this invention with reference to the drawings accompanying this specification, which, in view of their essentially illustrative purpose, must be interpreted as non-limiting examples of the scope of legal protection sought, wherein:
Fig. 1 is an exploded perspective view of a clamping part and a closure part according to the object of the invention, not coupled to one another and ready to be installed in the space of a joint a pair of trays fitted head to head.

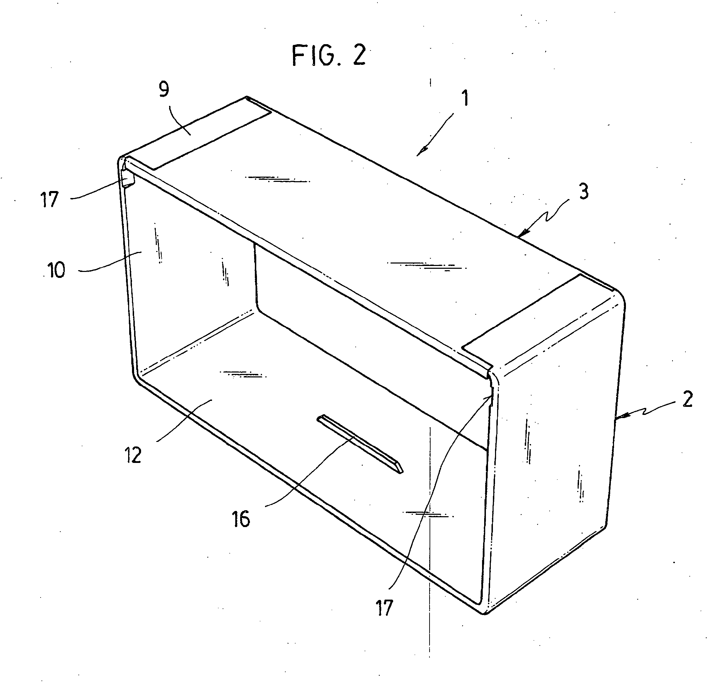

Fig. 2 is a perspective view of the annular body of the butt-strap according to the invention, formed by the clamping and closure parts in the preceding figure, in a position of virtual mutual coupling wherein the corresponding trays with lid have been omitted.
Fig. 3 is a front elevation view of the annular body of the butt-strap in the preceding figure, installed in a set of two trays with lids, shown in dotted lines.
Fig. 4 is a plan view, partially sectioned in the closure part, of the annular body of the butt-strap applied to the space of a joint of the ends of a pair of trays with lid fitted head to head.
Fig. 5 represents a centred, longitudinal section of the annular body of the butt-strap in Fig. 1, wherein the clamping part and the closure part are virtually positioned in a stage immediately after they have been coupled, where the trays with lids have been omitted.

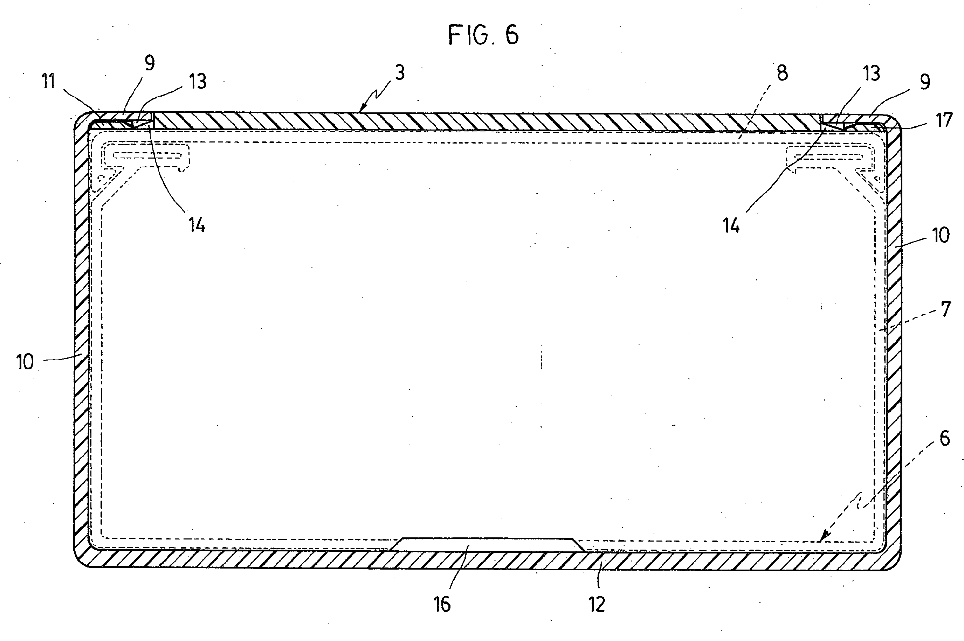

Fig. 6 represents a longitudinal section of the clamping part and the closure part in the preceding figure once they have virtually been coupled, in the absence of the trays with lids.

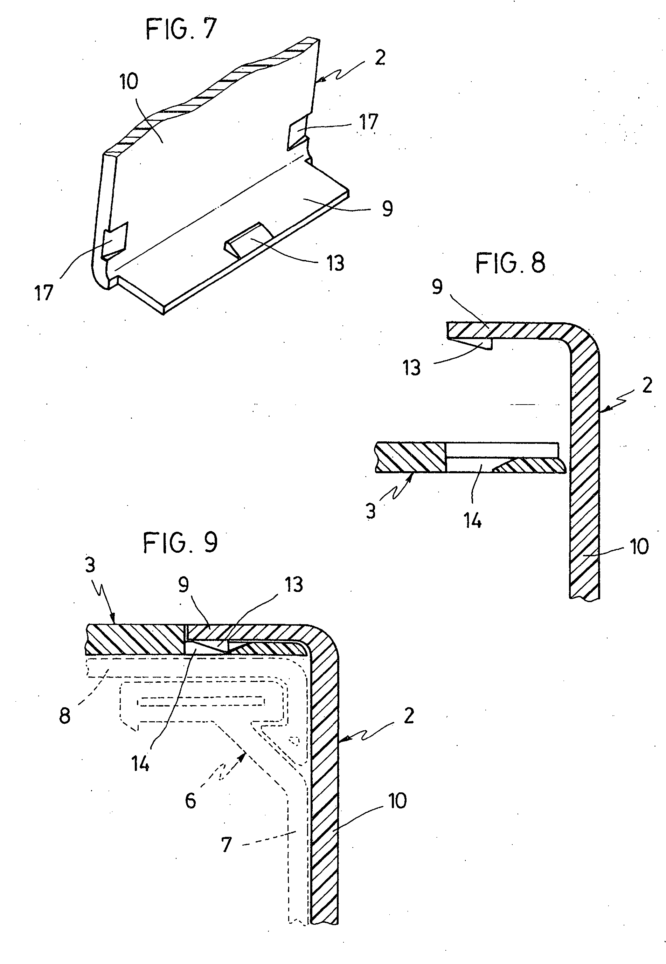

Fig. 7 represents, in a perspective view, an internal detail of the ends of the clamping part which is hidden in the perspective views in Figs. 1 and 2.
Fig. 8 represents, on a larger scale and in a longitudinal section, a detail of the mutual coupling area of the clamping part and the closure part in a position prior to coupling.
Fig. 9 represents the detail in Fig. 7 once the coupling between the clamping and closure parts has been carried out, except that the profile of a possible tray with lid is shown in dotted lines.

### Description of an embodiment of the invention

The butt-strap of the invention is applied to the known electrical conductor trays with lid, which generally are made from synthetic materials, and which are made by associating a base body, which is straight channel shaped, with a lid body, also straight channel shaped, which adjusts on the outside and fits in a releasable manner into the outer faces of the walls of the base body. These trays, which can be installed horizontally in cantilever supports or vertically abutting a wall, receive mutual association means that make it possible to place longitudinally, head to head, two consecutive trays leaving between them a free space serving as a joint for absorbing thermal expansions or contractions.

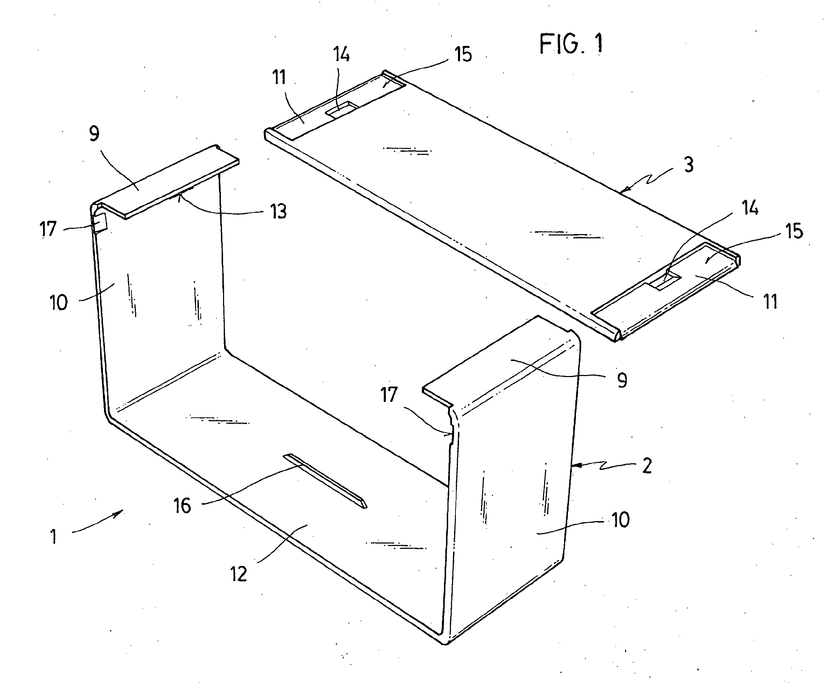

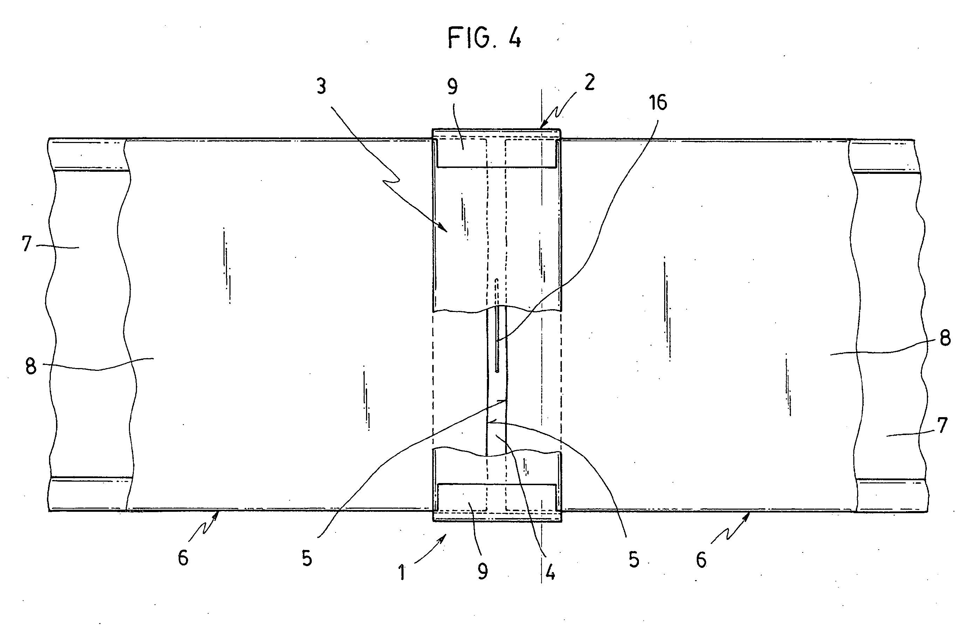

Fig. 1 shows in an exploded, perspective view, a preferred embodiment of a butt-strap for said trays with lid. According to the invention, the butt-strap is made up of a complex annular body 1 formed by the releasable association of a clamping part 2 with a closure part 3, and which is intended to behave, as illustrated in Figure 4, like the butt-strap in the free space of the thermal expansion or contraction joint between the edges of the ends 5 of two trays 6 which are made up of a base body 7 and a lid body 8 and which are consecutively aligned head to head.

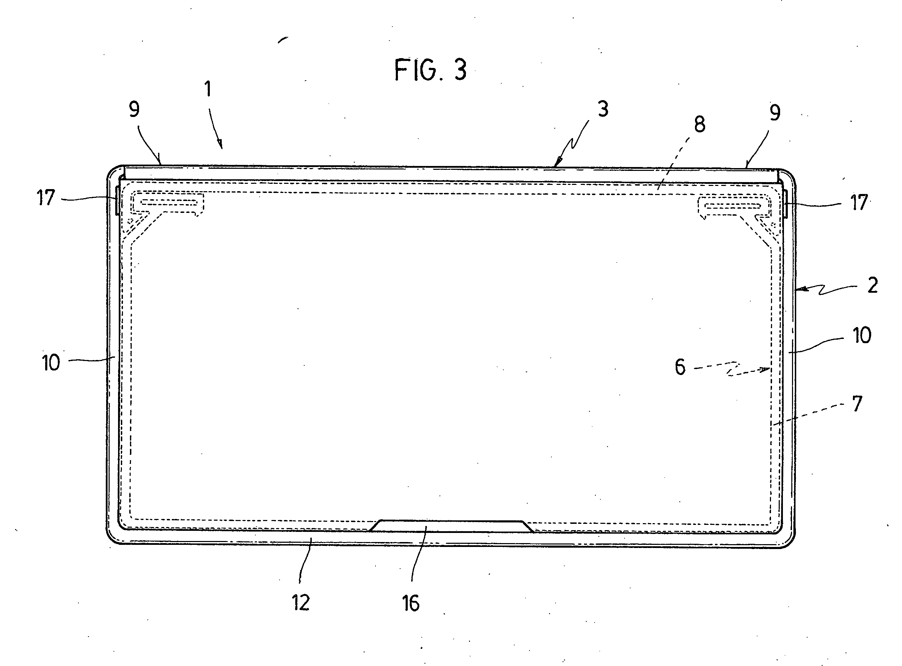

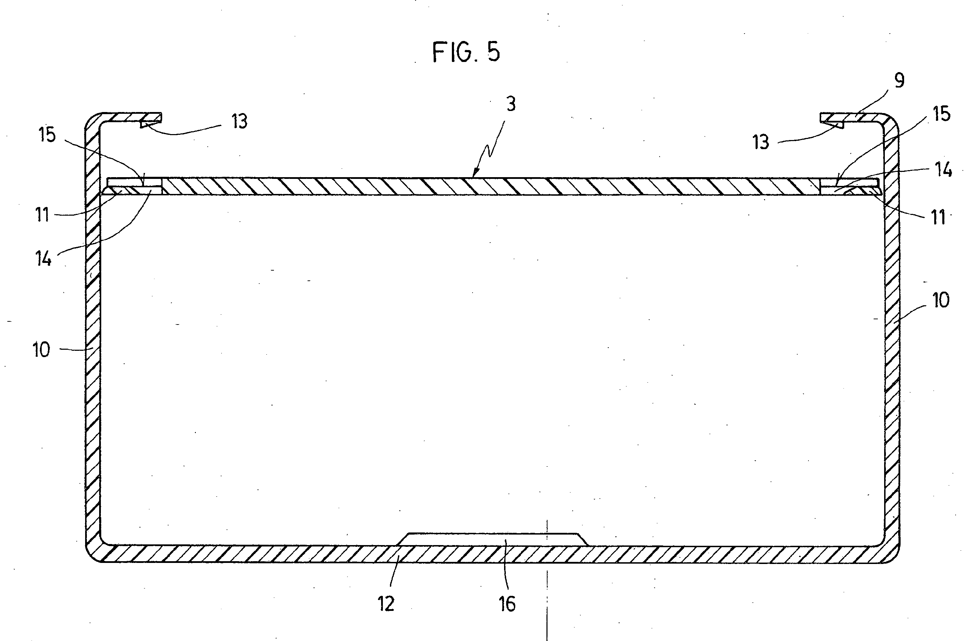

Clamping part 2 is straight channel shaped and covers in abutment, as shown in Figs. 3, 4 and 5, and in transverse direction, a first part of a peripheral transverse area of tray 6, which comprises the base and the walls of base body 7, and the longitudinal margins of a second part of the periphery of said transverse area of the base body 7 of tray 6 or of lid body 8, by means of two inner cantilever wings 9 that emerge from walls 10 of said clamping part. The width of clamping part 2 is greater than that of the free space of the thermal expansion or contraction joint 4 between the edges of the ends 5 of two trays 6 with lid body 8 consecutively aligned head to head, as shown in Fig. 4.

Closure part 3 is as wide as clamping part 2 and flat, and it can be coupled in a releasable manner by the two ends thereof 11 to cantilever wings 9 of the ends of walls 10 of clamping part 2. Said closure part 3 abuts under said cantilever wings 9 a third and final part of the said peripheral transverse area, which is formed by the surface of one of the outer faces of said tray 6 formed by base body 7 and lid body 8.

Clamping part 2, which as indicated is channel shaped, has its walls 10 flat and perpendicular to a base 12 also flat. Said clamping part is made with an electrically insulating elastic material and has the two end edges of its two walls folded in said inner cantilever wings 9, which are coplanar and parallel to base 12 of clamping part 2 on which they extend and which have a width and thickness smaller than the width and thickness of walls 10 of clamping part 2.

Inner cantilever wings 9 which emerge from walls 10 of clamping part 2 have, on their face facing base 12 of said clamping part, releasable retention means that complement other retention means provided on the ends of closure part 3.

According to a preferable embodiment, said releasable retention means of closure part 3 on inner cantilever wings 9 of clamping part 2 are of the releasable grooving and tonguing type, and can consist of a tooth 13 provided on the bottom face of wings 9 of clamping part 2 and a fitting 14 provided on the top face of the ends 11 of closure part 3.

Closure part 3 has on the top face of its ends 11 two rectangular depressions 15 that are narrower than the rest of the part and which fit at the bottom in the cantilever wings 9 of walls 10 of clamping part 2, which are narrower than said clamping part.

Clamping 2 and/or closure 3 parts can have, on their surface abutting base body 7 and/or lid body 8 of tray 6, means for fitting into the free space of expansion joint 4 defined between two consecutive trays 6.

These means for fitting in clamping part 2 are provided in the centre and lengthwise on the inner face of base 12 of said clamping part 2 and consist of an orthogonal flange 16 that is shorter in length than said base 12. The height and thickness of said orthogonal flange 16 do not exceed, respectively, the thickness of base body 7 of tray 6 and the width of the free space of expansion joint 4.

Similarly, said fitting means can be provided on closure part 3, in which case they are provided in the centre and lengthwise, on the inner face of said closure part 3 and consist of an orthogonal flange, not shown in the drawings, which has the same characteristics of length, height and thickness as orthogonal flange 16 of clamping part 2.

When the butt-strap is provided so that clamping part 2 includes in its base 12 the base body 7 of tray 6, annular complex body 1 is formed by the releasable association of, on the one part, clamping part 2 that is straight channel shaped, which in abutment covers in the transverse direction the periphery of base body 7 of tray 6 and the edges of lid body 8, while by means of inner cantilever wings 9 it covers the longitudinal margins of said lid body 8, all with a width greater than the free space of thermal expansion joint 4 between two consecutive trays 6 aligned head to head, and on the other hand, closure part 3 that has an equivalent width and is flat shaped, and which can be coupled in a releasable manner, at the ends thereof, to cantilever wings 9 of walls 10 of clamping part 2 and abuts, under these, the surface of the larger outer face of lid body 8.

In another possible arrangement of the butt-strap, annular complex body 1 is formed by the association of, on the one hand, clamping part 2 that is straight channel shaped, which in abutment covers in the transverse direction a first part of a peripheral area of lid body 8 and the sides of base body 7 of tray 6 and, by means of the two inner cantilever wings 9, the longitudinal margins of a second part of the periphery of base body 7 of tray 6 of said transversal area, all with a greater width than that of the free space of thermal expansion joint 4 provided between two consecutive trays 6 aligned head to head, and on the other hand, closure part 3, which is equivalent in width to clamping part 2 and which can be coupled in a releasable manner, by the ends thereof, cantilever wings 9 of walls 10 of said clamping part 2 and abuts, under these, a third final part of said transverse area of the periphery, which is made up of the surface of the larger outer face of base body 7 of tray 6.

When tray 6 is installed abutting onto a wall, only the installation of clamping part 2 is permitted on said tray. In this case clamping part 2 covers: with the inner face of its base 12, the outer face of lid body 8; with its walls, the sides of base body 7 and the edges of lid body 8; and with its inner cantilever wings 9, two longitudinal margins of the larger outer face of base body 7 of tray 6.

Walls 10 of clamping part 2 have on each side edge a notch 17, in the vicinity of where inner cantilever wings 9 emerge, for inserting an instrument, such as a flat screwdriver, for forcing the disengagement of clamping 2 and closure 3 parts.

The width of clamping 2 and closure 3 parts is appropriate for the clearance of the butt-strap positioned on tray 6 with its lid body 8 to be such that it prevents, in any position, the access of undesirable external elements in the space of expansion joint 4.

## Claims

1. Combination of two consecutive trays and a butt-strap, each of said trays being a tray (6) for electrical conductor with lid, made up of the association of a base body (7), which is straight channel shaped, with a lid body (8), that adjusts on the outside and fits in a releasable manner into the outer faces of the walls of said base body (7), which trays (6) can be installed horizontally on cantilever supports or vertically abutting onto a wall and receive mutual association means that make it possible to place longitudinally, head to head, two of said consecutive trays (6) leaving between them a free space (4) serving as a joint to absorb any possible thermal expansion or contraction, and said butt-strap consisting of a complex annular body (1) formed by the association of a clamping part (2) and a closure part (3); wherein
- said clamping part (2) is straight channel shaped and in abutment covers, in the transverse direction, a first part of a peripheral transverse area of said consecutive trays (6), said peripheral transverse area being formed by the base body (7) and the lid body (8) of said trays (6), and the longitudinal margins of a second part of said peripheral transverse area by means of two inner cantilever wings (9) that emerge from the walls (10) of said clamping part (2), wherein the width of said clamping part (2) is greater than that of said free space serving as joint (4) existing between the edges of the ends of said consecutive trays (6); and wherein
- said closure part (3) is flat shaped and has the same width as said clamping part (2); said closure part (3) can be coupled in a releasable manner by the two ends thereof to said cantilever wings at the ends of walls (10) of said clamping part (2); **characterised in that**: said closure part (3) abuts, under said cantilever wings (9), a third part of said peripheral transverse area, said third part being formed by the surface of one of the larger outer faces of said peripheral transverse area.

2. Combination of two consecutive trays and a butt-strap according to claim 1, **characterized in that** said clamping part (2) is made with an electrically insulating elastic material and said inner cantilever wings (9) are coplanar and parallel to base (12) of said clamping part (2) on which they extend and have a width and thickness smaller than the width and thickness of walls (10) of said clamping part (2).

3. Combination of two consecutive trays and a butt-strap according to claim 2, **characterized in that** said inner cantilever wings (9) have, on their face facing towards base (12) of said clamping part (2), releasable retention means (13) which complement other retention means (14) provided on the ends (11) of said closure part (3).

4. Combination of two consecutive trays and a butt-strap according to claim 3, **characterized in that** said closure part (3) also is made with an electrically insulating material, is flat shaped and has a length determined by the distance between said retention means (13) on inner cantilever wings (9), and a width equivalent to that of said clamping part (2).

5. Combination of two consecutive trays and a butt-strap according to claim 4, **characterized in that** said closure part (3) has on the ends of its outer face two rectangular depressions (15) in which there fit at the bottom said inner cantilever wings (9) of walls (10) of clamping part (2).

6. Combination of two consecutive trays and a butt-strap according to claim 1, **characterized in that** said clamping (2) and/or closure (3) parts have, on their face facing said base body (7) and/or said lid body (8) of consecutive trays (6), means (16) for fitting in said free space (4) serving as a joint.

7. Combination of two consecutive trays and a butt-strap according to claim 6, **characterized in that** said means for fitting of clamping part (2) are arranged, in the centre and lengthwise, on the inner face of base (12) of said clamping part (2) and consist of an orthogonal flange (16) which is shorter in length than said base (12) with the height and thickness of said orthogonal flange (16) not exceeding respectively the thickness of said base body (7) of tray (6) and the width of said free space (4) serving as a joint.

8. Combination of two consecutive trays and a butt-strap according to claim 6, **characterized in that** said means for fitting of closure part (3) are arranged, in the centre and lengthwise, on the inner face of said closure part (3) and consist of an orthogonal flange (16) which is shorter in length than said closure part (3), with the height and thickness of said orthogonal flange not exceeding respectively the thickness of said base body (7) of tray (6) and the width of said free space (4) serving as a joint.

9. Combination of two consecutive trays and a butt-strap according to claim 1, **characterized in that** it comprises releasable retention means of said closure part (3) on said inner cantilever wings (9) of clamping part (2), which are releasable grooving and tonguing means.

10. Combination of two consecutive trays and a butt-strap according to claim 1, **characterized in that** walls (10) of said clamping part (2) have on each side edge thereof a notch (17), in the vicinity of where said inner cantilever wings (9) emerge, for inserting an instrument for forcing the disengagement of said clamping part (2) and said closure part (3).

## Patentansprüche

1. Kombination zweier aufeinanderfolgender Wannen und einer Decklasche, wobei jede der Wannen eine Wanne (6) für elektrische Leitungen mit Deckel ist und durch die Verbindung eines Grundkörpers (7), der die Form eines geraden Kanals aufweist, mit einem Deckelkörper (8), der auf der Außenseite angepasst ist und auf eine lösbare Weise in die Außenseiten der Wände des Grundkörpers (7) passt, gebildet wird, wobei die Wannen (6) waagerecht auf Auslegerhalterungen oder senkrecht auf eine Wand aufsetzend installiert werden und wechselseitige Verbindungseinrichtungen empfangen können, die es ermöglichen, zwei der aufeinanderfolgenden Wannen (6) in Längsrichtung, Kopf an Kopf, zu platzieren und zwischen ihnen einen freien Raum (4) zu lassen, der als eine Verbindungsstelle zur Absorption jeglicher möglicher thermischer Expansion oder Kontraktion dient, und wobei die Decklasche aus einem komplexen ringförmigen Körper (1) besteht, der durch die Verbindung eines Umfassungsteils (2) und eines Schließteils (3) gebildet wird;
wobei:
das Umfassungsteil (2) die Form eines geraden Kanals aufweist und im angelegten Zustand in der Querrichtung einen ersten Teil eines Querrandbereichs der aufeinanderfolgenden Wannen (6), wobei der Querrandbereich durch den Grundkörper (7) und den Deckelkörper (8) der Wannen (6) gebildet wird, und die Längsränder eines zweiten Teils des Querrandbereichs mittels zweier inneren herausragenden Flügel (9), die von den Wänden (10) des Umfassungsteils (2) herausragen, abdeckt, wobei die Breite des Umfassungsteils (2) größer als die des freien Raums ist, der als zwischen den Kanten der Enden der aufeinanderfolgenden Wannen (6) vorhandene Verbindungsstelle (4) dient; und wobei:
das Schließteil (3) eine flache Form aufweist und die gleiche Breite wie das Umfassungsteil (2) aufweist, wobei das Schließteil (3) auf eine lösbare Weise mittels seiner zwei Enden mit den herausragenden Flügeln an den Enden der Wände (10) des Umfassungsteils (2) gekoppelt werden kann;
**gekennzeichnet dadurch, dass** das Schließteil (3) unter den herausragenden Flügeln (9) auf einem dritten Teil des Querrandbereichs aufsetzt, wobei der dritte Teil durch die Oberfläche einer der größeren Außenflächen des Querrandbereichs gebildet wird.

2. Kombination zweier aufeinanderfolgender Wannen und einer Decklasche nach Anspruch 1, **gekennzeichnet dadurch, dass** das Umfassungsteil (2) mit einem elektrisch isolierenden elastischen Material hergestellt ist und die inneren herausragenden Flügel (9) koplanar und parallel zur Basis (12) des Umfassungsteils (2), auf dem sie verlaufen, sind und eine Breite und Dicke aufweisen, die kleiner als die Breite und Dicke von Wänden (10) des Umfassungsteils (2) sind.

3. Kombination zweier aufeinanderfolgender Wannen und einer Decklasche nach Anspruch 2, **gekennzeichnet dadurch dass** die inneren herausragenden Flügel (9) auf ihrer der Basis (12) des Umfassungsteils (2) zugewandten Seite lösbare Rückhalteeinrichtungen (13) aufweisen, die an den Enden (11) des Schließteils (3) vorgesehene andere Rückhalteeinrichtungen (14) komplementieren.

4. Kombination zweier aufeinanderfolgender Wannen und einer Decklasche nach Anspruch 3, **gekennzeichnet dadurch, dass** das Schließteil (3) ebenfalls mit einem elektrisch isolierenden Material hergestellt ist, eine flache Form aufweist und eine Länge, die durch den Abstand zwischen der Rückhalteeinrichtung (13) auf den inneren herausragenden Flügel (9) bestimmt ist, sowie eine zu der des Umfassungsteils (2) äquivalente Breite aufweist.

5. Kombination zweier aufeinanderfolgender Wannen und einer Decklasche nach Anspruch 4, **gekennzeichnet dadurch, dass** das Schließteil (3) auf den Enden seiner Außenfläche zwei rechteckige Vertiefungen (15) aufweist, in die am Boden die inneren herausragenden Flügel (9) von Wänden (10) des Umfassungsteils (2) passen.

6. Kombination zweier aufeinanderfolgender Wannen und einer Decklasche nach Anspruch 1, **gekennzeichnet dadurch, dass** das Umfassungsteil (2) und/oder das Schließteil (3) auf ihrer dem Grundkörper (7) und/oder dem Deckelkörper (8) aufeinanderfolgender Wannen (6) zugewandten Seite eine Einrichtung (16) zum Einpassen in den als eine Verbindungsstelle dienenden freien Raum (4) aufweisen.

7. Kombination zweier aufeinanderfolgender Wannen und einer Decklasche nach Anspruch 6, **gekennzeichnet dadurch, dass** die Einrichtung zum Einpassen des Umfassungsteils (2) zentral und der Länge nach auf der Innenseite der Basis (12) des Umfassungsteils (2) angeordnet ist und aus einer orthogonalen Zunge (16) besteht, die eine kürzere Länge als die Basis (12) aufweist, wobei die Höhe und Dicke der orthogonalen Zunge (16) jeweils nicht die Dicke des Grundkörpers (7) der Wanne (6) und die Breite des als Verbindungsstelle dienenden freien Raums (4) übersteigen.

8. Kombination zweier aufeinanderfolgender Wannen und einer Decklasche nach Anspruch 6, **gekennzeichnet dadurch, dass** die Einrichtung zum Einpassen des Schließteils (3) zentral und der Länge nach auf der Innenseite des Schließteils (3) angeordnet ist und aus einer orthogonalen Zunge (16) besteht, die eine kürzere Länge als das Schließteil (3) aufweist, wobei die Höhe und die Dicke der orthogonalen Zunge jeweils nicht die Dicke des Grundkörpers (7) der Wanne (6) und die Breite des als eine Verbindungsstelle dienenden freien Raums (4) übersteigen.

9. Kombination zweier aufeinanderfolgender Wannen und einer Decklasche nach Anspruch 1, **gekennzeichnet dadurch, dass** sie eine lösbare Rückhalteeinrichtung des Schließteils (3) auf den inneren herausragenden Flügeln (9) des Umfassungsteils (2) umfasst, die eine lösbare Feder- und Nutverbindung ist.

10. Kombination zweier aufeinanderfolgender Wannen und einer Decklasche nach Anspruch 1, **gekennzeichnet dadurch, dass** Wände (10) des Umfassungsteils (2) auf jeder ihrer Seitenkanten eine Kerbe (17) in der Umgebung von dort, wo die inneren herausragenden Flügel (9) herausragen, zum Einfügen eines Werkzeugs zum Erzwingen der Loslösung des Umfassungsteils (2) und des Schließteils (3) aufweisen.

## Revendications

1. Combinaison de deux plateaux consécutifs et d'un couvre-joint, chacun desdits plateaux étant un plateau (6) pour conducteur électrique avec un couvercle, composé de l'association d'un corps de base (7) qui est en forme de goulotte droite, avec un corps de couvercle (8) qui s'ajuste sur l'extérieur et s'adapte d'une manière amovible dans les faces externes des parois dudit corps de base (7), lesquels plateaux (6) peuvent être installés horizontalement sur des supports en porte-à-faux ou venant verticalement en butée sur une paroi et recevoir des moyens d'association mutuels qui permettent de placer longitudinalement, tête contre tête, deux desdits plateaux (6) consécutifs laissant entre eux un espace libre (4) servant de joint afin d'absorber toute dilation ou contraction thermique éventuelle, et dudit couvre-joint qui se compose d'un corps annulaire complexe (1) formé par l'association d'une partie de bride (2) et d'une partie de fermeture (3) ;
dans laquelle :
ladite partie de bride (2) est en forme de goulotte droite et recouvre en butée, dans la direction transversale, une première partie d'une zone transversale périphérique desdits plateaux (6) consécutifs, ladite zone transversale périphérique étant formée par le corps de base (7) et le corps de couvercle (8) desdits plateaux (6), et les marges longitudinales d'une deuxième partie de ladite zone transversale périphérique au moyen de deux ailes internes en porte-à-faux (9) qui émergent des parois (10) de ladite partie de bride (2), dans laquelle la largeur de ladite partie de bride (2) est supérieure à celle dudit espace libre servant de joint (4) existant entre les bords des extrémités desdits plateaux (6) consécutifs ; et dans laquelle :
ladite partie de fermeture (3) a une forme plate et a la même largeur que ladite partie de bride (2) ; ladite partie de fermeture (3) peut être couplée d'une manière amovible par ses deux extrémités, auxdites ailes en porte-à-faux au niveau des extrémités des parois (10) de ladite partie de bride (2);
**caractérisée en ce que** ladite partie de fermeture (3) vient en butée, sous lesdites ailes en porte-à-faux (9), contre une troisième partie de ladite zone transversale périphérique, ladite troisième partie étant formée par la surface de l'une des plus grandes faces externes de ladite zone transversale périphérique.

2. Combinaison de deux plateaux consécutifs et d'un couvre-joint selon la revendication 1, **caractérisée en ce que** ladite partie de bride (2) est réalisée d'un matériau élastique électriquement isolant et lesdites ailes internes en porte-à-faux (9) sont coplanaires et parallèles à la base (12) de ladite partie de bride (2) sur laquelle elles s'étendent et ont une largeur et une épaisseur inférieures à la largeur et à l'épaisseur (10) de ladite partie de bride (2).

3. Combinaison de deux plateaux consécutifs et d'un couvre-joint selon la revendication 2, **caractérisée en ce que** lesdites ailes internes en porte-à-faux (9) ont, sur leur face orientée vers la base (12) de ladite partie de bride (2), des moyens de retenue (13) amovibles qui complètent d'autres moyens de retenue (14) prévus sur les extrémités (11) de ladite partie de fermeture (3).

4. Combinaison de deux plateaux consécutifs et d'un couvre-joint selon la revendication 3, **caractérisée en ce que** ladite partie de fermeture (3) est également réalisée d'un matériau électriquement isolant, a une forme plate et a une longueur déterminée par la distance située entre lesdits moyens de retenue (13) sur les ailes internes en porte-à-faux (9) et une largeur équivalente à celle de ladite partie de bride (2).

5. Combinaison de deux plateaux consécutifs et d'un couvre-joint selon la revendication 4, **caractérisée en ce que** ladite partie de fermeture (3) a, sur les extrémités de sa face externe, deux dépressions rectangulaires (15) dans lesquelles s'adaptent, au niveau du fond, lesdites ailes internes en porte-à-faux (9) des parois (10) de la partie de bride (2).

6. Combinaison de deux plateaux consécutifs et d'un couvre-joint selon la revendication 1, **caractérisée en ce que** lesdites parties de serrage (2) et/ou de fermeture (3) ont, sur leur face faisant face audit corps de base (7) et/ou audit corps de couvercle (8) des plateaux (6) consécutifs, des moyens (16) pour s'adapter dans ledit espace libre (4) servant de joint.

7. Combinaison de deux plateaux consécutifs et d'un couvre-joint selon la revendication 6, **caractérisée en ce que** lesdits moyens pour l'ajustement de la partie de bride (2) sont agencés, dans le centre et le sens de la longueur, sur la face interne de base (12) de ladite partie de bride (2) et se composent d'un talon orthogonal (16) qui est plus court en longueur que ladite base (12), avec la hauteur et l'épaisseur de ledit talon orthogonal (16) qui ne dépassent pas respectivement l'épaisseur dudit corps de base (7) du plateau (6) ni la largeur dudit espace libre (4) servant de joint.

8. Combinaison de deux plateaux consécutifs et d'un couvre-joint selon la revendication 6, **caractérisée en ce que** lesdits moyens pour l'ajustement de la partie de fermeture (3) sont agencés, dans le centre et le sens de la longueur, sur la face interne de ladite partie de fermeture (3) et se composent d'un talon orthogonal (16) qui est plus court en longueur que ladite partie de fermeture (3), avec la hauteur et l'épaisseur de ledit talon orthogonal qui ne dépassent pas respectivement l'épaisseur dudit corps de base (7) du plateau (6) ni la largeur dudit espace libre (4) servant de joint.

9. Combinaison de deux plateaux consécutifs et d'un couvre-joint selon la revendication 1, **caractérisée en ce qu'**elle comprend des moyens de retenue amovibles de ladite partie de fermeture (3) sur lesdites ailes internes en porte-à-faux (9) de la partie de bride (2) qui sont des moyens de rainure et de languette amovibles.

10. Combinaison de deux plateaux consécutifs et d'un couvre-joint selon la revendication 1, **caractérisée en ce que** les parois (10) de ladite partie de bride (2) ont, sur chacun de leur bord latéral, une encoche (17), à proximité de l'endroit où lesdites ailes internes en porte-à-faux (9) émergent, pour insérer un instrument afin de forcer le dégagement de ladite partie de bride (2) et de ladite partie de fermeture (3).
